# EUROPÄISCHE PATENTSCHRIFT

(11) **EP 3 093 115 B1**
(45) Veröffentlichungstag und Bekanntmachung des Hinweises auf die Patenterteilung: **12.07.2017**
(21) Anmeldenummer: 15167615.2
(22) Anmeldetag: 13.05.2015
(51) Int. Cl.: B29C 45/16, B60J 10/00

(54) **AUFNAHMEVORRICHTUNG UND ANSPRITZVERFAHREN**
HOLDING DEVICE AND INJECTION METHOD
DISPOSITIF DE RÉCEPTION ET PROCÉDÉ D'INJECTION

(43) Veröffentlichungstag der Anmeldung: 16.11.2016
(73) Patentinhaber: Stefan Pfaff Werkzeug- und Formenbau GmbH Co KG, 88167 Röthenbach im Allgäu (DE)
(72) Erfinder: Sutter, Anton, 88171 Weiler-Simmerberg (DE)
(74) Vertreter: Otten, Roth, Dobler & Partner mbB Patentanwälte

(56) Entgegenhaltungen:
- EP-A1- 0 372 745
- EP-A1- 2 546 846
- WO-A1-2012/153234
- DE-A1- 2 747 157
- DE-A1- 3 216 063
- DE-A1- 3 232 700
- DE-A1-102013 011 762
- DE-C1- 4 314 191
- FR-A1- 2 233 485
- FR-A1- 2 668 095
- JP-A- 2002 067 077
- US-A- 5 829 378

## Beschreibung

Die Erfindung betrifft eine Aufnahmevorrichtung zur Aufnahme eines ersten Profils, insbesondere eines Dichtungsprofils für Fahrzeugtüren sowie ein Anspritzverfahren für entsprechende Profile.

Aus dem Stand der Technik ist bekannt, Dichtungsprofile, zum Beispiel für Fahrzeugtüren zu fertigen, indem einzelne Profilteile an ein erstes Profil, ein so genanntes zentrales Profil, angespritzt werden. Um einen solchen Anspritzvorgang durchzuführen, wird entweder das zentrale Profil in eine Form geschoben bzw. die Form wird auf das Profil aufgeschoben, während das anzuspritzende Profil ebenfalls in einem Bereich der Form aufgenommen wird. Um einen weiteren Anspritzvorgang vorzunehmen, wird das Profil der Form entnommen, und anschließend wird eine weitere Form aufgeschoben, um ein anderes Profil mit dem zentralen Profil zu verbinden. Auch separate Anspritzvorgänge, mit denen kein Profil angefügt wird, sondern lediglich das Ende eines Profils mit einem Kunststoffabschluss versehen wird, können durchgeführt werden.

Aus der JP 2002 067077 A ist eine Form bekannt, die zwei Teilformen aufweist, welche in festem Abstand über ein fest angebrachtes Verbindungsteil miteinander verbunden sind.

Aufgabe der Erfindung ist es, eine Aufnahmevorrichtung bzw. ein Anspritzverfahren bereitstellen zu können, bei dem die Fertigungstoleranzen verringert werden können.

Die Aufgabe wird, ausgehend von einer Aufnahmevorrichtung bzw. einem Anspritzverfahren der eingangs genannten Art, durch die Merkmale des Anspruchs 1 sowie durch die kennzeichnenden Merkmale des Anspruchs 11 gelöst.

Durch die in den Unteransprüchen genannten Maßnahmen sind vorteilhafte Ausführungen und Weiterbildungen der Erfindung möglich.

Die erfindungsgemäße Aufnahmevorrichtung dient zunächst zur Aufnahme eines ersten, zentralen Profils, insbesondere eines Dichtungsprofils für Fahrzeugtüren, um an das erste Profil wenigstens ein, insbesondere zwei weitere Profile anzuspritzen. Die Aufnahmevorrichtung wird dazu in einer entsprechenden Spritzmaschine eingebaut bzw. angeordnet. Dazu umfasst die erfindungsgemäße Aufnahmevorrichtung wenigstens zwei Formen, um das erste Profil in jeder der Formen zumindest abschnittsweise zu haltern.

Unter einer Form wird vorliegend eine Halterungsvorrichtung für ein Profil verstanden, die das Profil insbesondere an fünf Seiten und/oder vollständig umschließt und in welcher der Anspritzvorgang durchgeführt wird. Die Form kann als Ganzes in eine Spritzmaschine eingebaut werden. Sie kann auch aus einzelnen Formteilen zusammengesetzt sein.

Bei der erfindungsgemäßen Aufnahmevorrichtung sind die wenigstens zwei Formen über eine Verbindungsvorrichtung miteinander verbunden, wobei eine Verbindungsvorrichtung jeweils zwei der wenigstens zwei Formen miteinander verbindet. Grundsätzlich können beliebig viele Verbindungsvorrichtungen vorgesehen sein. Die Verbindungsvorrichtung dient zusätzlich zur Ausrichtung des ersten Profils, das heißt, das erste Profil kann an der Verbindungsvorrichtung anliegen und somit positioniert (zum Beispiel gerade gerichtet) werden. In vorteilhafter Weise kann das ersten Profil auf diese Weise über seine gesamte Länge oder zumindest über annähernd die gesamte Länge formstabil gehaltert werden. Die Formen wiederum besitzen eine Aufnahmeöffnung zur Aufnahme und Halterung des Profils. Zur Einbringung des Profils wird in der Regel entweder die Form auf das Profil oder umgekehrt das Profil in die Form geschoben.

Im vorliegenden Fall wird gemäß der Erfindung auch die Verbindungsvorrichtung in die Aufnahmeöffnung eingebracht. Die Aufnahmeöffnung ist entsprechend dazu ausgebildet, das erste Profil und die Verbindungsvorrichtung in wenigstens einer der beiden miteinander verbundenen Formen wenigstens teilweise versenkbar aufzunehmen.

Die erfindungsgemäße Aufnahmevorrichtung ermöglicht es somit, dass die für die Verarbeitung des Profils erforderliche Halterung auf annähernd der gesamten Länge erfolgen kann und gleichzeitig mehrere Formen zum Anspritzen des ersten Profils dabei verwendet werden. In der Regel werden also zwei Formen einander gegenübergestellt, sodass das zentrale Profil teilweise in jeder der beiden Formen aufgenommen und dazwischen gehaltert werden kann. In jeder Form kann zum Beispiel ein weiteres Profil angespritzt werden. Auch eine dritte Form (oder mehr) können gegebenenfalls zusätzlich verwendet werden. Aufgrund dieser Tatsache, dass das erste, zentrale Profil, also zumindest über fast seine gesamte Länge formstabil gehaltert wird und wenigstens zwei Anspritzformen in diese Halterung mit eingebunden sind, ist es möglich, mehrere (wenigstens zwei) Anspritzvorgänge parallel durchzuführen. Durch diese Maßnahme kann also auch eine genauere Fertigung mit geringeren Toleranzen erreicht werden, weil nach einem Anspritzvorgang das Profil nicht zur Durchführung des nächsten Anspritzvorgangs entnommen werden muss. Dies gilt insbesondere für Anspritzvorgänge, bei denen nicht nur eine Endbearbeitung erfolgt, sondern bei denen zwei Profile über einen Anspritzvorgang miteinander verbunden werden. Bei einer einfachen Endbearbeitung wird in der Regel lediglich der Kunststoff auf das Profil aufgebracht, jedoch kein weiteres Profil mit dem zentralen Profil verbunden.

Es ist denkbar, die Aufnahmevorrichtung gemäß der Erfindung in einer einzigen Spritzmaschine einzuspannen und dort die Bearbeitungsvorgänge/Anspritzvorgänge durchzuführen. Je nach Art des zu bearbeitenden Profils kann es jedoch vorteilhaft sein, die Aufnahmevorrichtung für verschiedene Anspritzvorgänge in unterschiedlichen Spritzmaschinen einzuspannen. Die Spritzmaschinen können dabei in einer festen Position zueinander angeordnet werden. Je nach zu bearbeitendem Profil kann es andernfalls zu Platzproblemen führen, wenn die entsprechenden Spritzaggregate in Bezug auf das Profil positioniert werden. Darüber hinaus kann es auch vorteilhaft sein, verschiedene Spritzaggregate zu verwenden, wenn verschiedene Kunststoffe eingespritzt werden. Grundsätzlich ist es aber auch denkbar, die erfindungsgemäße Aufnahmevorrichtung in einer einzigen Spritzmaschine einzubinden und dort den Anspritzvorgang durchzuführen. In vorteilhafter Weise ermöglicht es die Erfindung, ein gleichzeitiges Anspritzen unterschiedlicher Komponenten vorzunehmen, insbesondere auch von Komponenten, die sich hinsichtlich ihrer Bearbeitungsparameter und ihrer Verarbeitungszeit unterscheiden. Unter einer Komponente wird vorliegend der anzuspritzende Kunststoff, zum Beispiel ein thermoplastisches Elastomer oder EPDM verstanden. Ferner ermöglicht die Erfindung, dass in einer Form gleichzeitig zwei unterschiedliche Komponenten an das Profil angespritzt werden (in der Regel an unterschiedlichen Stellen des Profils).

Jedes Aufschieben einer Form auf ein Profil oder allgemein jedes Haltern eines Profils ist grundsätzlich mit Toleranzen verbunden, sei es durch systematische oder statistische Fehler bedingt. Die Toleranzen können daher grundsätzlich verringert werden, wenn die Anzahl der bei der Verarbeitung durchzuführenden Einspannvorgänge, bei denen das Profil in Formen eingebracht wird, möglichst gering gewählt wird und mit einer der Formen dafür mehrere Bearbeitungsschritte erfolgen können.

Es ist bei einer Ausführungsvariante der Erfindung auch möglich, z.B. ein Ende eines Profils mit einem angespritzten Abschluss zu versehen (Endanspritzung), ohne dabei ein weiteres Profil daran anzubringen. Ferner können sogenannte Positionierpins angespritzt werden, die als Referenzmarken zur Positionierung dienen können. Diese Variante ist daher besonders flexibel verwendbar.

Oftmals werden Positionierpins, manchmal aber auch Endanspritzungen oder sogar Anspritzungen zur Verbindung zweier Profile, mit einer anderen Komponente (einem anderen Kunststoff) angespritzt. Die Fertigung sieht dann Anspritzvorgänge mit wenigstens zwei Komponenten vor. Eine vorteilhafte Weiterbildung der Erfindung erlaubt entsprechend den Anschluss zum Anschließen eines zusätzlichen Spritzaggregats, um eine Endanspritzung und/oder einen Positionierpin und/oder ein weiteres Profil mit einer anderen Komponente anzuspritzen. Somit können diese beiden Vorgänge mit unterschiedlichen Komponenten gleichzeitig vorgenommen werden, ohne dass das Profil ausgebaut und in eine neue Form eingebracht werden muss. Die Fertigung kann dadurch nicht nur vereinfacht werden, sie kann auch präziser erfolgen, und es kann Zeit eingespart werden.

Erfindungsgemäß ist die Aufnahmevorrichtung dazu ausgebildet, den Abstand zwischen den beiden verbundenen Formen einzustellen. Dies ist insbesondere vorteilhaft, wenn die Aufnahmevorrichtung in die Spritzmaschine bzw. die Spritzmaschinen eingebunden wird, weil in gewissem Maße Toleranzen bei der Positionierung der Aufnahmevorrichtung in der oder in den Spritzmaschinen somit ausgeglichen werden können. Sind beispielsweise zwei Spritzmaschinen in einem festen Abstand und einer festen Position vorpositioniert worden, sodass die Ausnahmevorrichtung in die beiden Spritzmaschinen eingebracht werden kann, wobei eine der verwendeten Form in eine Spritzmaschine und die andere Form in die andere Spritzmaschine eingebunden wird, so können durch die Verstellung des Abstandes der Formen zueinander etwaige Wegtoleranzen zwischen den Formen ausgeglichen werden. Insbesondere ist es denkbar, dass die Spritzmaschinen zuvor genauer vorpositioniert wurden, als die Länge des zentralen Profils abgemessen worden ist.

Die Verbindungsvorrichtung ist dazu mit Spiel in der Aufnahmeöffnung lagerbar. Vorzugsweise weist die Verbindungsvorrichtung einen Anschlag auf, bis zu dem ein Verschieben der Verbindungsvorrichtung innerhalb der Aufnahmeöffnung erfolgen kann.

Darüber hinaus ist es bei einem Ausführungsbeispiel der Erfindung auch möglich, dass die Aufnahmevorrichtung mit in den wenigstens zwei Formen positionsstabil gehaltertem Profil und mit positionsstabil gelagerten Formen bewegbar ist. Durch diese Maßnahme kann ermöglicht werden, dass auch eine weitere Bearbeitung mit der gleichen Aufnahmevorrichtung und mit entsprechend geringen Toleranzen ausgeführt werden kann.

Um bei der Weiterverarbeitung und/oder Einpassung der Profile einen Referenzpunkt zu bekommen, können an den Profilen so genannte Positionierpins angebracht sein. Bei diesen Positionierpins handelt es sich in der Regel um ein angespritztes Kunststoffmaterial. Bei der Fertigung wird das erste Profil in der Regel in die Form eingebracht, bzw. die Form wird auf das erste Profil aufgeschoben und der Positionierpin kann sodann an das erste Profil angespritzt werden. Grundsätzlich ist es aber auch bei einer Weiterbildung der Erfindung denkbar, dass eine Form einen Anschlag für einen bereits vorhandenen Positionierpin, der zuvor am ersten Profil angespritzt worden ist, aufweist, um das erste Profil bezüglich seiner Position definiert in den Formen aufnehmen zu können. Auch hierbei können Fertigungstoleranzen verbessert werden.

Ferner kann auch bei einem Ausführungsbeispiel der Erfindung eine Führung, zum Beispiel eine Linearführung, zur Aufnahme des Positionierpins vorgesehen sein. Damit kann eine einfache, schnelle und präzise Positionierung des Profils erfolgen. Das Handling, gerade bei einer robotergesteuerten Positionierung, kann wesentlich vereinfacht werden.

Da das Profil meistens während der Fertigung nicht dauerhaft in der Form verbleibt, kann bei einer Ausführungsvariante der Erfindung eine der Formen wenigstens eine Auswurfvorrichtung aufweisen, die dazu ausgebildet ist, das Profil aus der Form wieder entnehmen zu können. Ein solcher Auswerfer kann einen verfahrbaren Zylinder oder Stößel aufweisen, der das Profil aus der Form drückt. Bei einer besonders bevorzugten Weiterbildung der Erfindung sind die Auswurfvorrichtungen dazu ausgebildet, synchron ausgefahren zu werden, um das bzw. die Profile auszuwerfen. Insbesondere bei der Verwendung wenigstens zweier Formen können somit die in den Formen gehalterten Profilabschnitte gleichzeitig ausgeworfen werden. Es ist denkbar, pro Form eine oder mehrere Auswurfvorrichtungen vorzusehen. Durch diese Maßnahme kann nicht nur die Bearbeitungszeit verkürzt werden. Vielmehr kann auch die Bearbeitung des Profils an sich vereinfacht werden, weil der gehalterte Zustand auch an mehreren Stellen gleichzeitig gelöst werden kann.

Regelmäßig kann ein Ausführungsbeispiel der Erfindung dazu ausgebildet sein, dass die Aufnahmevorrichtung selbst bzw. die entsprechenden Formen dazu ausgebildet und/oder angeordnet sind, das erste Profil zumindest an seinen Enden zu halten. Oftmals erfolgt in diesen Bereichen die Bearbeitung. Zudem ist in der Regel die stabilste Lage des Profils während der Fertigung zu erwarten, wenn zumindest seine Enden oder der Bereich der Enden gehaltert werden bzw. wird.

Handelt es sich bei den Profilen um Dichtungsprofile für Fahrzeuge, sind diese meist biegeschlaff und erfordern deshalb gerade zu deren Weiterverarbeitung entsprechende Halterungen. Ist der entsprechende Anspritzvorgang erfolgt, werden gegebenenfalls weitere Bearbeitungsvorgänge, wie zum Beispiel ein Beschneiden der Profile, durchgeführt. Wenn diese Verarbeitung eine Entnahme des Profils aus der Aufnahmevorrichtung bzw. aus den Formen erfordert, weist bei einer vorteilhaften Ausführungsform der Erfindung wenigstens eine der Formen wenigstens einen zusammen mit dem ersten Profil auswerfbaren Abschnitt zum Halten, insbesondere zum formstabilen Halten des ersten Profils auf. Es ist auch denkbar, dass die Handhabung des Profils unmittelbar an diesem auswerfbaren Abschnitt selbst erfolgt, das heißt zum Beispiel kann dieser auswerfbare Abschnitt von einem Roboterarm, oder gegebenenfalls auch manuell gegriffen werden, sodass das Profil weiter transportiert und positioniert werden kann. Auch hierdurch wird noch einmal die Fertigungstoleranz verbessert, weil der auswerfbare Abschnitt das Profil definiert haltert und somit eine Referenzmarke für die weitere Positionierung in Bezug auf das Profil bereitgestellt wird.

Dementsprechend zeichnet sich ein Verfahren zum Anspritzen, insbesondere bei Profilen wie Dichtungsprofilen für Fahrzeugtüren, dadurch aus, dass eine Aufnahmevorrichtung gemäß der Erfindung bzw. eines der Ausführungsbeispiele verwendet werden. Dieses Verfahren ermöglicht insbesondere das Anspritzen wenigstens zweier Profile an ein erstes, zentrales Profil. Es können also die bereits genannten technischen Vorteile der Aufnahmevorrichtung gemäß der Erfindung bzw. die Vorteile zu deren Ausführungsformen genutzt werden. Ferner wird ermöglicht, dass bei dem erfindungsgemäßen Verfahren zwei Anspritzvorgänge gleichzeitig durchgeführt werden können: Dies betrifft nicht nur das parallele Anspritzen mehrerer Profile an ein erstes Profil, sondern auch das gleichzeitige Anspritzen unterschiedlicher Komponenten an ein Profil, und zwar selbst dann, wenn die Komponenten unterschiedliche Verarbeitungsparameter, insbesondere unterschiedliche Verarbeitungszeiten aufweisen.

Grundsätzlich wird während des Anspritzvorgangs gemäß der Erfindung das Profil durch die Formen sowie durch die Verbindungsvorrichtung formstabil gehalten. Zur Erhöhung dieser Wirkung und zur Ermöglichung eines weiteren formstabilen Weiterverarbeitens des Profils kann das erste Profil mit einer Seele als Träger versehen werden, wobei die Seele insbesondere aus Metall bzw. Kunststoff oder gegebenenfalls auch aus einem Verbundwerkstoff vorgesehen sei. In der Regel handelt es sich dabei um ein vergleichsweise hartes Material, damit die Formstabilität erreicht wird. Durch diese Maßnahme wird in der Regel die Fertigung wesentlich vereinfacht.

Das Profil kann bei einer Ausführungsvariante der Erfindung über seine gesamte oder zumindest fast über seine gesamte Länge ausgerichtet oder sogar gehaltert werden. Zum einen wird dadurch das Profil in einer Bearbeitungsposition definiert gehaltert. Die Verbindungsvorrichtung dient im Speziellen zur formstabilen Halterung über die gesamte oder zumindest einen großen Teil der Länge des zentralen Profils. Durch eine möglichst positionsgenaue Halterung können Toleranzen verbessert und die Verarbeitung des Profils vereinfacht werden.

Bei einer besonders bevorzugten Weiterbildung der Erfindung werden die wenigstens zwei Profile an das erste Profil gleichzeitig angespritzt. Die Positionierung der angespritzten Profile in Bezug auf das erste Profil kann also besonders genau erfolgen. Insgesamt ist aber auch die Zeit zur Verarbeitung des Profils wesentlich kürzer als bei herkömmlichen Verfahren, weil das Anspritzen gleichzeitig erfolgen kann und zudem das erste Profil nicht aus seiner Form entnommen und in eine weitere Form eingebracht werden muss.

In besonders vorteilhafter Weise ermöglicht eine Ausführungsform der Erfindung, dass ein gleichzeitiges Anspritzen an unterschiedlichen Stellen des ersten Profils von wenigstens zwei verschiedenen Werkstoffen mit unterschiedlicher Verarbeitungszeit, insbesondere von thermoplastischen Elastomeren (Abkürzung: TPE) und zum Beispiel EPDM (Abkürzung für: Ethylen-Propylen-Dien-Kautschuk) durchgeführt. Derartige Werkstoffe unterscheiden sich sehr stark insbesondere in ihrer Verarbeitungszeit, sodass es nun erstmals ermöglicht wird, diese parallel anzuspritzen. Die Verarbeitungszeit, aber auch die Fertigungsgenauigkeit kann dadurch wesentlich verbessert werden.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Figur 1: eine Anordnung einer Aufnahmevorrichtung gemäß der Erfindung in einer Spritzmaschine,
- Figur 2: zeigt eine schematische Darstellung einer Form einer Aufnahmevorrichtung gemäß der Erfindung, sowie
- Figur 3: eine weitere Anordnung einer Aufnahmevorrichtung gemäß der Erfindung in einer Spritzmaschine.

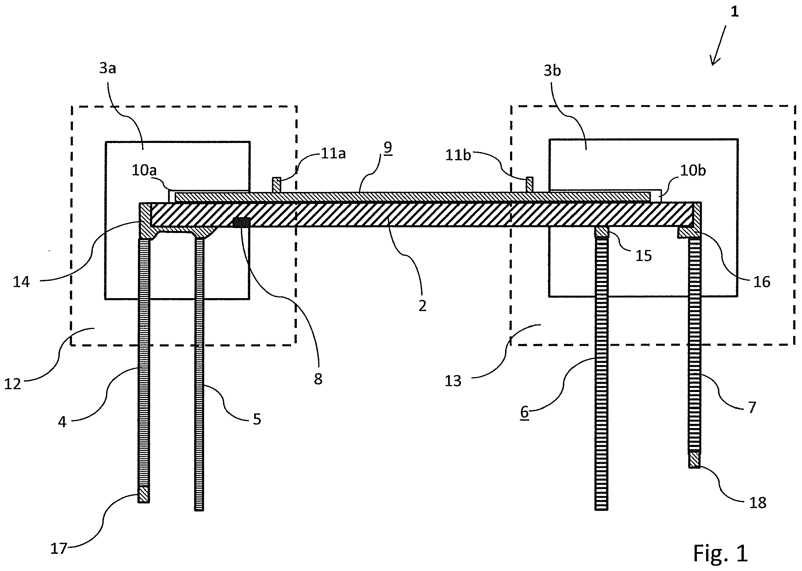

Figur 1 zeigt eine Aufnahmevorrichtung 1, in die ein erstes, zentrales Profil 2 eingebracht ist. Die Aufnahmevorrichtung 1 umfasst zwei Formen 3a und 3b, wobei das erste Profil an seinem linken Ende in der Form 3a und an seinem zweiten Ende in der Form 3b gelagert ist. An das erste Profil 2 sollen die Profile 4, 5, 6 und 7 angespritzt werden, wobei die Profile 4, 5 dazu in der Form 3a gelagert und an dem dortigen Ende angespritzt werden können, während die Profile 6, 7 über die Form 3b mit dem ersten Profil 2 verbunden werden können. Beim Anspritzvorgang in der Form 3a wird zusätzlich ein Positionierpin 8 angespritzt. Der Positionierpin 8 wird mit einer anderen Komponente angespritzt als die Profile 4, 5, 6 und 7.

Zwischen den Formen 3a und 3b ist eine Verbindungsvorrichtung 9 angeordnet. Jede der Formen 3a, 3b weist eine Aufnahmeöffnung 10a, 10b auf, in die sowohl das entsprechende Ende des ersten Profils 2 als auch der entsprechende Teil der Verbindungsvorrichtung 9 eingebracht ist. Das erste Profil 2 wird formstabil zwischen den beiden Formen gelagert, indem es an der Verbindungsvorrichtung 9 anliegt. Die Verbindungsvorrichtung 9 wiederum ist zwischen den Anschlägen 11a und 11b leicht verschiebbar, sodass entsprechend auch eine leichte Anpassung des Abstandes zwischen den beiden Formen 3a und 3b gemäß der Länge des ersten Profils 2 sowie gemäß des Abstandes der beiden Spritzmaschinen 12, 13 angepasst und gewählt werden kann.

Die beiden Spritzmaschinen 12, 13 sind fest zueinander positioniert und haben einen definierten Abstand. Auch im Bereich des ersten Profils 2 sind nun fest definierte Abstandsangaben vorgegeben, durch deren Aufteilung insgesamt eine genauere Toleranz erreicht werden kann. Geht man zum Beispiel vom linken Anschlag im Bereich der Form 3a aus, so kann eine Positionierung zum Beispiel relativ zum Positionierpin 8 erfolgen. Die Profile 6 und 7 können grundsätzlich in Bezug auf zwei Bezugspunkte positioniert werden, nämlich zum einen zum linken Anschlag innerhalb der Form 3a und zum anderen in Bezug auf den Positionierpin 8. Die Profile 4, 5, 6, 7 sind im Verbindungsbereich zum ersten Profil jeweils an den Stellen 14, 15 und 16 angespritzt. Diese Stellen 14, 15, 16 werden mit einem/mehreren thermoplastischen Elastomer/Elastomeren angespritzt.

Im vorliegenden Fall ist es auch möglich, zwei verschiedene Komponenten in einer der Formen 3a bzw. 3b oder auch in den jeweiligen Formen untereinander anzuspritzen. Diese Anspritzung kann gleichzeitig erfolgen, und dies ist in vorteilhafter Weise auch dann möglich, wenn die Verarbeitungszeit unterschiedlich lang ist. Der Positionierpin 8 wird mit einem anderen Kunststoff angespritzt, z.B. PP(Polypropylen).

Darüber hinaus können grundsätzlich auch Kunststoffe im Endbereich von Profilen, sei es im Endbereich des ersten, zentralen Profils oder im Endbereich eines anderen Nebenprofils angespritzt werden. Derartige Bereiche, die im vorliegenden Fall auch schon vorher angespritzt werden konnten, befinden sich zum Beispiel an den Endbereichen des Profils 4 die Stelle 17 und im Endbereich des Profils 7 die Stelle 18. Im vorliegenden Fall handelt es sich bei dem Gesamtprofil, bestehend aus den Einzelprofilen 2, 4, 5, 6, 7 um ein Dichtungsprofil für eine Fahrzeugtür, wobei der Teil im Bereich der Form 3a für die B-Säule und der Bereich im Zusammenhang mit der Form 3b für die C-Säule verwendet wird.

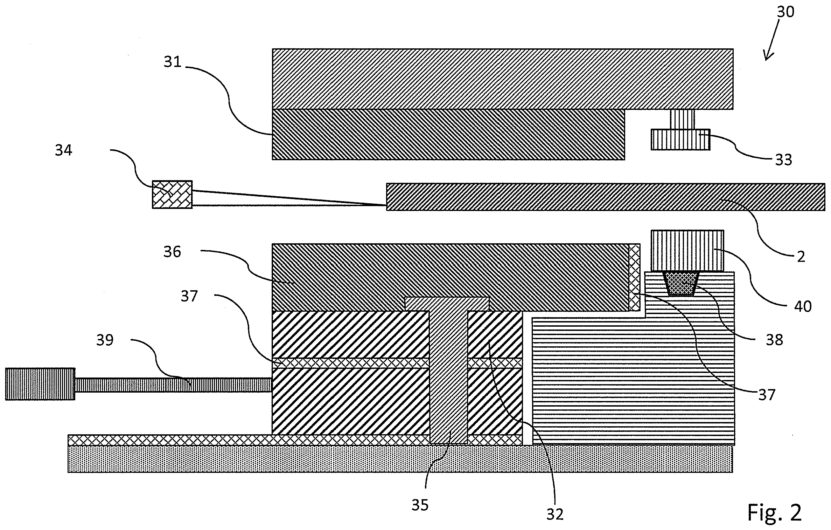

Figur 2 zeigt eine Form 30 mit einem Oberteil 31 und einem Unterteil 32, wobei das Oberteil 31 einen Andrücker 33 zum Andrücken des Profils 2 umfasst. Die Position des Profils 2 wird über einen mit Laser betriebenen optischen Abstandssensor 34 bestimmt und positioniert. Im Unterteil 32 ist ein Auswerfer 35 integriert. Das Profil 2 wird im Bereich des Formteils 36 mit EPDM angespritzt. Im Bereich des Formteils 38 wird der Positionierpin wiederum angespritzt. Zur Isolierung sind Isolierungsbereiche 37 vorgesehen. Die Anspritzung mit EPDM im Formteil 36 erfolgt bei wesentlich höheren Temperaturen als bei PP im Bereich 38. Ein Endbereich 56 kann zum Beispiel als Anschlag zur Positionierung auch verwendet werden. Grundsätzlich haben in vorteilhafter Weise Beschnitttoleranzen in der Regel keine Auswirkung auf die Längenmaße. Während auf einer Seite ein Ende (zum Beispiel das Ende 56) als Anschlag zur Positionierung dienen kann, wobei dort im vorliegenden Fall gemäß Figur 2 ohnehin eine

Anspritzung erfolgt, kann auf der Gegenseite eine Längenkontrolle mit Hilfe eines optischen Abstandsensors 34 vorgenommen werden. Dadurch, dass der Positionierpin 8 als Profilaufnahme verwendet werden kann, ist nochmals eine genauere Positionierung des Profils in Fertigung möglich. Der mechanische Antrieb für den Auswerfer 35 kann über einen Zylinder 39 bzw. mechanisch erfolgen. Die Klappen 40 stützen gegen den Spritzdruck ab.

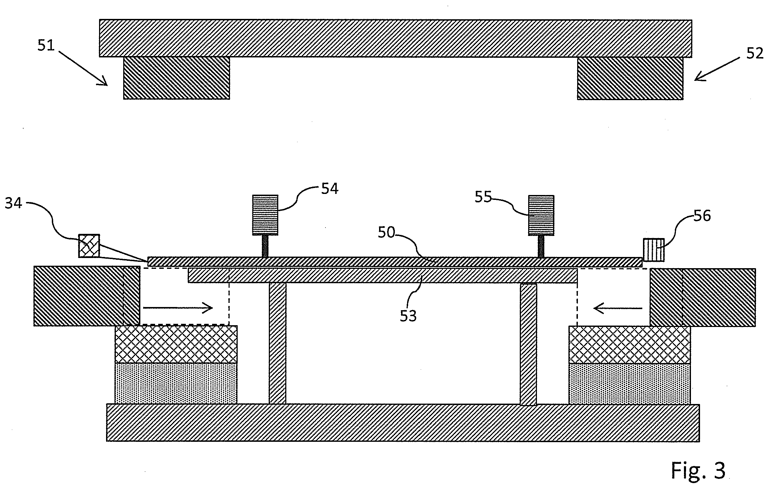

Figur 3 zeigt ein Dachprofil 50, das zwischen zwei Formen 51, 52 gelagert ist und über eine Verbindungsvorrichtung 53 formstabil gehalten wird. In den Bereichen 54, 55 erfolgt eine Profilklemmung. Im rechten Bereich des Profils 50 (gemäß Fig. 3) ist an dessen Ende eine Anspritzung 56 vorgenommen worden. Dieses Ende 56 des Profils 50 dient als Anschlag in der Form 52 zur weiteren Positionierung. Am anderen Ende des Profils 50 erfolgt eine Längen-/Positionskontrolle über den optischen Sensor 34. Die Formen 51, 52 werden jeweils auf das Dachprofil 50 auf beiden Seiten jeweils aufgeschoben. Die Genauigkeit der Positionierung ist dadurch in der Regel besonders gut. Die Positionierung kann vollständig automatisch erfolgen. In vorteilhafter Weise können TPE, das einen anderen Prozessablauf erfordert, und EPDM parallel angespritzt werden (Simultananspritzung).

### Bezugszeichenliste:

- 1: Aufnahmevorrichtung
- 2: erstes / zentrales Profil
- 3a: Form
- 3b: Form
- 4: Nebenprofil
- 5: Nebenprofil
- 6: Nebenprofil
- 7: Nebenprofil
- 8: Positionierpin
- 9: Verbindungsvorrichtung
- 10a: Aufnahmeöffnung
- 10b: Aufnahmeöffnung
- 11a: Anschlag
- 11b: Anschlag
- 12: Spritzmaschine
- 13: Spritzmaschine
- 14: Anspritzungen zur Profilverbindung
- 15: Anspritzungen zur Profilverbindung
- 16: Anspritzungen zur Profilverbindung
- 17: Endanspritzungen
- 18: Endanspritzungen
- 30: Form
- 31: Oberteil
- 32: Unterteil
- 33: Andrücker
- 34: optischer Wegsensor
- 35: Auswerfer
- 36: EPDM-Anspritzung/Formteil
- 37: Isolierung
- 38: Formteil (Positionierpin)
- 39: Zylindermechanik
- 40: Klappen
- 50: Dachprofil
- 51: Form
- 52: Form
- 53: Verbindungsvorrichtung
- 54: Profilklemmung
- 55: Profilklemmung
- 56: Endanschlag

## Patentansprüche

1. Aufnahmevorrichtung (1) zur Aufnahme eines ersten Profils (2; 50), insbesondere eines Dichtungsprofils für Fahrzeugtüren, welche dazu ausgebildet ist, an das erste Profil (2; 50) wenigstens ein, insbesondere zwei weitere Profile (4, 5, 6, 7) anzuspritzen, umfassend wenigstens zwei Formen (3a, 3b; 30; 51, 52), um das erste Profil (2; 50) in jeder der Formen (3a, 3b; 30; 51, 52) zumindest abschnittsweise zu haltern, mit einer Verbindungsvorrichtung (9, 53) zur Verbindung von zwei der wenigstens zwei Formen (3a, 3b; 51, 52) und zur Ausrichtung des ersten Profils (2; 50), wobei die beiden miteinander verbundenen Formen jeweils wenigstens eine Aufnahmeöffnung (10a, 10b) zur Aufnahme und Halterung des Profils (2; 50) und der Verbindungsvorrichtung (9, 53) umfassen, wobei die Aufnahmeöffnung (10a, 10b) dazu ausgebildet ist, das erste Profil (2; 50) und die Verbindungsvorrichtung (9, 53) in wenigstens einer der beiden miteinander verbundenen Formen (3a, 3b; 30; 51, 52) wenigstens teilweise versenkbar aufnehmen zu können; **dadurch gekennzeichnet, dass** die Aufnahmevorrichtung (1) dazu ausgebildet ist, den Abstand zwischen den beiden verbundenen Formen (3a, 3b; 30; 51, 52) einzustellen, indem die Verbindungsvorrichtung (9, 53) mit Spiel in der Aufnahmeöffnung (10a, 10b) lagerbar ist.

2. Aufnahmevorrichtung (1) nach einem der vorgenannten Ansprüche, **dadurch gekennzeichnet, dass** wenigstens eine der Formen (3a, 3b; 51, 52) dazu ausgebildet ist, eine Anspritzung an ein Profil, insbesondere das erste Profil (2; 50) zur Herstellung einer Endanspritzung und/oder zur Herstellung eines Positionierpins (8) vorzunehmen.

3. Aufnahmevorrichtung (1) nach einem der vorgenannten Ansprüche, **dadurch gekennzeichnet, dass** ein Anschluss zum Anschließen eines zusätzlichen Spritzaggregats vorhanden ist, um eine Endanspritzung und/oder einen Positionierpin (8) und/oder ein weiteres Profil (4, 5, 6, 7) mit einer anderen als der zum Anspritzen wenigstens eines der weiteren Profile verwendeten Komponente anzuspritzen.

4. Aufnahmevorrichtung (1) nach einem der vorgenannten Ansprüche, **dadurch gekennzeichnet, dass** die Verbindungsvorrichtung (9, 53) einen Anschlag (11a, 11b) aufweist, bis zu dem ein Verschieben der Verbindungsvorrichtung (9, 53) innerhalb der Aufnahmeöffnung (10a, 10b) erfolgen kann.

5. Aufnahmevorrichtung (1) nach einem der vorgenannten Ansprüche, **dadurch gekennzeichnet, dass** die Aufnahmevorrichtung mit in den wenigstens zwei Formen (3a, 3b; 51, 52) positionsstabil gehaltertem Profil (2; 50) und mit positionsstabil gelagerten Formen (3a, 3b; 30; 51, 52) bewegbar ist.

6. Aufnahmevorrichtung (1) nach einem der vorgenannten Ansprüche, **dadurch gekennzeichnet, dass** ein Anschlag für einen Positionierpin am ersten Profil (2; 50) vorgesehen ist, um das erste Profil (2; 50) bezüglich seiner Position definiert in den Formen (3a, 3b; 30; 51, 52) aufnehmen zu können.

7. Aufnahmevorrichtung (1) nach einem der vorgenannten Ansprüche, **dadurch gekennzeichnet, dass** wenigstens eine der Formen (3a, 3b; 30; 51, 52) wenigstens eine Auswurfvorrichtung (35) aufweist, wobei insbesondere wenigstens zwei der Auswurfvorrichtungen (35) vorhanden und dazu ausgebildet sind, synchron ausgefahren zu werden, um eines der Profile (2; 50; 4, 5, 6, 7) auszuwerfen.

8. Aufnahmevorrichtung (1) nach einem der vorgenannten Ansprüche, **dadurch gekennzeichnet, dass** eine Führung, insbesondere eine Linearführung zur Aufnahme des Positionierpins (8) und zur Führung des ersten Profils (2; 50) über den Positionierpin (8) vorgesehen ist, wobei insbesondere ein Anschlag für den Positionierpin (8) vorhanden ist, bis zu dem das erste Profil (2; 50) zur definierten Aufnahme in wenigstens einer der Formen (3a, 3b; 30; 51; 52) verschoben werden kann.

9. Aufnahmevorrichtung (1) nach einem der vorgenannten Ansprüche, **dadurch gekennzeichnet, dass** die Aufnahmevorrichtung und/oder wenigstens zwei der Formen (3a, 3b; 30; 51, 52) dazu ausgebildet und/oder angeordnet sind, das erste Profil (2; 50) zumindest an seinen Enden zu haltern.

10. Aufnahmevorrichtung (1) nach einem der vorgenannten Ansprüche, **dadurch gekennzeichnet, dass** wenigstens eine der Formen (3a, 3b; 30; 51, 52) wenigstens einen zusammen mit dem ersten Profil (2; 50) auswerfbaren Abschnitt zum Halten, insbesondere zum formstabilen Halten bei der Weiterverarbeitung des ersten Profils (2; 50) aufweist.

11. Verfahren zum Anspritzen wenigstens zweier Profile (4, 5, 6, 7) an ein erstes Profil (2; 50), insbesondere an ein Dichtungsprofil für Fahrzeugtüren, **dadurch gekennzeichnet, dass** eine Aufnahmevorrichtung (1) nach einem der vorgenannten Ansprüche verwendet wird.

12. Verfahren nach einem der vorgenannten Ansprüche, **dadurch gekennzeichnet, dass** das erste Profil (2; 50) mit einer Seele als Träger, insbesondere aus Metall und/oder aus Kunststoff und/oder aus einem Verbundwerkstoff, versehen wird.

13. Verfahren nach einem der vorgenannten Ansprüche, **dadurch gekennzeichnet, dass** das erste Profil (2; 50) über seine gesamte Länge geklemmt wird.

14. Verfahren nach einem der vorgenannten Ansprüche, **dadurch gekennzeichnet, dass** die wenigstens zwei Profile (4, 5, 6, 7) an das erste Profil (2; 50) gleichzeitig angespritzt werden.

15. Verfahren nach einem der vorgenannten Ansprüche, **dadurch gekennzeichnet, dass** ein gleichzeitiges Anspritzen an unterschiedlichen Stellen des ersten Profils (2; 50) von wenigstens zwei verschiedenen Werkstoffen mit unterschiedlicher Verarbeitungszeit, insbesondere von Thermoplasten und Elastomeren, vorzugsweise von TPE und EPDM durchgeführt wird.

## Claims

1. Receiving device (1) to receive a first profile (2, 50), in particular a sealing profile for vehicle doors, which is configured to overmold at least one, in particular two, further profiles (4, 5, 6, 7) on the first profile (2, 50), and comprises at least two forms (3a, 3b; 30; 51, 52) in order to hold the first profile (2; 50) in each of the forms (3a, 3b; 30; 51, 52) at least in sections, with a connection device (9, 53) for the connection of two of the at least two forms (3a, 3b; 51, 52) and for the alignment of the first profile (2; 50), wherein the two interconnected forms each comprise at least one receiving opening (10a, 10b) designed to receive and hold the profile (2; 50), and comprises the connection device (9, 53), wherein the receiving opening (10a, 10b) is so designed that the first profile (2; 50) and the connection device (9, 53) may be at least partially received inside at least one of the two interconnected forms (3a, 3b; 30; 51, 52);
**characterized in that**
the receiving device (1) is designed to adjust the distance between the two connected forms (3a, 3b; 30; 51, 52), wherein the connection device (9, 53) may be received with play in the receiving opening (10a, 10b).

2. Receiving device (1) according to one of the preceding claims,
**characterized in that**
at least one of the forms (3a, 3b; 51, 52), is designed to produce an overmold on a profile, in particular the first profile (2; 50) in order to produce an end mold and/or to produce a positioning pin (8).

3. Receiving device (1) according to one of the preceding claims,
**characterized in that**
a connection for connecting an additional injection molding unit is provided in order to provide an end mold and/or a positioning pin (8) and/or a further profile (4, 5, 6, 7) with a component other than the component used for the injection molding of at least one of the further profiles.

4. Receiving device (1) according to one of the preceding claims,
**characterized in that**
the connection device (9, 53) comprises a stop (11 a, 11 b), as far as which a displacement of the connection device (9, 53) may take place inside the receiving opening (10a, 10b).

5. Receiving device (1) according to one of the preceding claims,
**characterized in that**
the receiving device is movable with the at least two forms (3a, 3b; 51, 52) held position-stable in the profile (2; 50) and with the position-stable received forms (3a, 3b ; 30; 51, 52).

6. Receiving device (1) according to one of the preceding claims,
**characterized in that**
a stop for a positioning pin is provided on the first profile (2; 50), in order to receive the first profile (2; 50) in a defined way with respect to its position in the forms (3a, 3b; 30; 51, 52).

7. Receiving device (1) according to one of the preceding claims,
**characterized in that**
at least one of the forms (3a, 3b; 30; 51, 52) comprises at least one ejection device (35), wherein, in particular, at least two of the ejection devices (35) are provided and are designed to be extended synchronously in order to eject one of the profiles (2; 50; 4, 5, 6, 7).

8. Receiving device (1) according to one of the preceding claims,
**characterized in that**
a guide, in particular a linear guide, is provided to receive the positioning pin (8) and to guide the first profile (2; 50) via the positioning pin (8), wherein, in particular, a stop is provided for the positioning pin (8) and as far as which the first profile (2; 50) may be displaced in at least one of the forms (3a, 3b; 30; 51; 52).

9. Receiving device (1) according to one of the preceding claims,
**characterized in that**
the receiving device and/or at least two of the forms (3a, 3b; 30; 51, 52) are designed and/or arranged that the first profile (2; 50) is held at least at its ends.

10. Receiving device (1) according to one of the preceding claims,
**characterized in that**
at least one of the forms (3a, 3b; 30; 51, 52) comprises at least one section which may be ejected together with the first profile (2; 50) for holding, in particular for form-stable holding, during the further processing of the first profile (2; 50).

11. Method for the injection molding of at least two profiles (4, 5, 6, 7) on a first profile (2; 50), in particular on a sealing profile for vehicle doors,
**characterized in that**
a receiving device (1) is used according to one of the preceding claims.

12. Receiving device (1) according to one of the preceding claims,
**characterized in that**
the first profile (2; 50) is provided with a core as the carrier, in particular made of metal and/or plastic and/or a composite material.

13. Method according to one of the preceding claims,
**characterized in that**
the first profile (2; 50) is clamped over its entire length.

14. Method according to one of the preceding claims,
**characterized in that**
the at least two profiles (4, 5, 6, 7) are overmolded simultaneously on the first profile (2; 50).

15. Method according to one of the preceding claims,
**characterized in that**
at least two different materials, in particular of thermoplastics and elastomers, preferably TPE and EPDM, with different processing time, are simultaneously overmolded at different points of the first profile (2; 50).

## Revendications

1. Dispositif de logement (1) pour le logement d'un premier profilé (2 ; 50), plus particulièrement d'un profilé d'étanchéité pour des portières de véhicules, qui est conçu pour injecter sur le premier profilé (2 ; 50), plus particulièrement deux profilés supplémentaires (4, 5, 6, 7), comprenant au moins deux moules (3a, 3b ; 30 ; 51, 52), afin de maintenir le premier profilé (2 ; 50) dans chacune des deux moules (3a, 3b ; 30 ; 51, 52) au moins partiellement, avec un dispositif de liaison (9, 53) permettant de relier deux des au moins deux moules (3a, 3b ; 30 ; 51, 52) et d'orienter le premier profilé (2 ; 50), les deux moules reliés entre eux comprenant chacun au moins une ouverture de logement (10a, 10b) pour le logement et le maintien du profilé (2 ; 50) et le dispositif de liaison (9, 53), l'ouverture de logement (10a, 10b) étant conçue pour loger le premier profilé (2 ; 50) et le dispositif de liaison (9, 53) dans au moins un des deux moules (3a, 3b; 30; 51, 52) reliés entre eux, de manière au moins partiellement escamotable ; **caractérisé en ce que** le dispositif de logement (1) est conçu pour régler la distance entre les deux moules (3a, 3b ; 30 ; 51, 52) reliés en logeant le dispositif de liaison (9, 53) avec un jeu dans l'ouverture de logement (10a, 10b).

2. Dispositif de logement (1) selon l'une des revendications précédentes, **caractérisé en ce qu'**au moins un des moules (3a, 3b; 51, 52) est conçu pour effectuer une injection sur un profilé, plus particulièrement le premier profilé (2 ; 50) pour la réalisation d'une injection finale et/ou pour la réalisation d'une broche de positionnement (8).

3. Dispositif de logement (1) selon l'une des revendications précédentes, **caractérisé en ce qu'**un raccord est prévu pour le raccordement d'un dispositif d'injection supplémentaire afin de réaliser une injection finale et/ou une broche de positionnement (8) et/ou un profilé supplémentaire (4, 5, 6, 7) avec un composant différent de celui qui est utilisé pour l'injection d'au moins un des profilés supplémentaires.

4. Dispositif de logement (1) selon l'une des revendications précédentes, **caractérisé en ce que** le dispositif de logement (9, 53) comprend une butée (11a, 11b) jusqu'à laquelle un déplacement du dispositif de logement (9, 53) peut avoir lieu à l'intérieur de l'ouverture de logement (10a, 10b).

5. Dispositif de logement (1) selon l'une des revendications précédentes, **caractérisé en ce que** le dispositif de logement est mobile avec le profilé (2 ; 50) maintenu de manière stable par rapport à la position dans les au moins deux moules (3a, 3b ; 51, 52) et avec des moules (3a, 3b ; 30 ; 51, 52) logés de manière stable par rapport à la position.

6. Dispositif de logement (1) selon l'une des revendications précédentes, **caractérisé en ce qu'**une butée est prévue pour une broche de positionnement sur le premier profilé (2 ; 50) afin de pouvoir loger le premier profilé (2 ; 50) dans une position définie dans les moules (3a, 3b ; 30 ; 51, 52).

7. Dispositif de logement (1) selon l'une des revendications précédentes, **caractérisé en ce qu'**au moins un des moules (3a, 3b ; 30 ; 51, 52) comprend au moins un dispositif d'éjection (35), plus particulièrement au moins deux des dispositifs d'éjection (35) étant présents et conçus pour être sortis de manière synchrone afin d'éjecter un des profilés (2 ; 50 ; 4, 5, 6, 7).

8. Dispositif de logement (1) selon l'une des revendications précédentes, **caractérisé en ce qu'**un guidage, plus particulièrement un guide linéaire, est prévu pour le logement de la broche de positionnement (8) et pour le guidage du premier profilé (2 ; 50) au-dessus de la broche de positionnement (8), plus particulièrement une butée étant prévue pour la broche de positionnement (8), jusqu'à laquelle le premier profilé (2 ; 50) peut être déplacé pour un logement défini dans au moins un des moules (3a, 3b ; 30 ; 51, 52).

9. Dispositif de logement (1) selon l'une des revendications précédentes, **caractérisé en ce que** le dispositif de logement et/ou au moins deux des moules (3a, 3b ; 30 ; 51, 52) sont conçus et/ou disposés de façon à maintenir le premier profilé (2 ; 50) au moins au niveau de ses extrémités.

10. Dispositif de logement (1) selon l'une des revendications précédentes, **caractérisé en ce qu'**au moins un des moules (3a, 3b ; 30 ; 51, 52) comprend au moins une portion pouvant être éjectée conjointement avec le premier profilé (2 ; 50) pour le maintien, plus particulièrement le maintien rigide, lors du traitement ultérieur du premier profilé (2 ; 50).

11. Procédé d'injection d'au moins deux profilés (4, 5, 6, 7) sur un premier profilé (2 ; 50), plus particulièrement sur un profilé d'étanchéité pour portières de véhicules, **caractérisé en ce qu'**un dispositif de logement (1) selon l'une des revendications précédentes est utilisé.

12. Procédé selon l'une des revendications précédentes, **caractérisé en ce que** le premier profilé (2 ; 50) est muni d'une âme en tant que support, plus particulièrement constituée de métal et/ou de matière plastique et/ou d'un matériau composite.

13. Procédé selon l'une des revendications précédentes, **caractérisé en ce que** le premier profilé (2 ; 50) est serré sur toute sa longueur.

14. Procédé selon l'une des revendications précédentes, **caractérisé en ce que** les au moins deux profilés (4, 5, 6, 7) sont injectés simultanément sur le premier profilé (2 ; 50).

15. Procédé selon l'une des revendications précédentes, **caractérisé en ce qu'**une injection simultanée à différents endroits du premier profilé (2 ; 50) est effectuée à l'aide d'au moins deux matériaux différents avec des temps de traitement différents, plus particulièrement de thermoplastiques et d'élastomères, de préférence de TPE et d'EPDM.
